Europäisches Patentamt

(19) European Patent Office

Office européen des brevets

(11) Numéro de publication: **0 183 281**
**A2**

(12) ## DEMANDE DE BREVET EUROPEEN

(21) Numéro de dépôt: **85200074.4**

(22) Date de dépôt: **05.09.79**

(51) Int. Cl.⁴: **A 47 J 36/06**
**A 47 J 36/12**

(30) Priorité: **13.09.78 BE 870419**

(43) Date de publication de la demande:
**04.06.86 Bulletin 86/23**

(84) Etats contractants désignés:
**CH DE FR GB IT NL SE**

(60) Numéro de publication de la demande initiale
en application de l'article 76 CBE: **0 008 838**

(71) Demandeur: **Deutsche ITT Industries GmbH**
**Hans-Bunte-Strasse 19 Postfach 840**
**D-7800 Freiburg(DE)**

(84) Etats contractants désignés:
**DE**

(71) Demandeur: **ITT INDUSTRIES INC.**
**320 Park Avenue**
**New York, NY 10022(US)**

(84) Etats contractants désignés:
**CH FR GB IT NL SE**

(72) Inventeur: **Colley, Jacques Louis Joseph**
**rue Naniot 274**
**B-4000 Liege(BE)**

(72) Inventeur: **Vrydags, André Pierre Joseph**
**Montagne de Buren 15**
**B-4000 Liege(BE)**

(74) Mandataire: **Rosenoer, Jacques et al,**
**BELL TELEPHONE MANUFACTURING COMPANY S.A.**
**Dépt.des Brevets Francis Wellesplein 1**
**B-2000 Anvers(BE)**

(54) **Couvercle détachable pour un appareil de cuisson.**

(57) Le couvercle (2) d'une friteuse domestique peut être monté par encliquetage sur la cuve (1) à l'aide d'une tige (5) coudée en vilebrequin et pouvant tourillonnner librement à ces deux extrémités droites (8/8') dans une pièce en matière plastique (3) solidaire du couvercle. Les parties droites de la tige peuvent être insérées dans des encoches pratiquées dans des épaulements (10/10') prévus sur une autre pièce en matière plastique (4) solidaire de la cuve et pouvant notamment servir de poignée pour celle-ci. Après insertion de la tige lorsque le couvercle est dans une position inclinée au-dessus de l'horizontale, sa partie centrale en forme d'archet (9) peut êtra rabattue vers le bas pour venir se coincer contre la cuve assurant ainsi la fixation du couvele à charnière tout en permettant son démontage aisé. Afin de s'affranchir des tolérances de fabrication et de montage, la partie en forme d'archet vient de préférence s'arc-bouter contre une butée également formée dans la pièce (4) qui fournit les épaulements (10/10').

FIG. I

- 1 -

## COUVERCLE DÉTACHABLE POUR UN APPAREIL DE CUISSON

L'invention se rapporte à un couvercle détachable pour un appareil de cuisson et encliquetable dans une partie solidaire du récipient à l'aide d'une charnière constituée par une tige coudée s'engageant dans des encoches pratiquées dans cette partie.

Un tel couvercle encliquetable pour une friteuse domestique a été décrite dans le certificat d'utilité français No 2368857. La tige constituant l'axe de rotation du couvercle est repliée vers le bas à ses deux extrémités de façon à être maintenue serrée contre la cuve de la friteuse par l'une des deux oreilles de manutention. La rotation du couvercle autour de cet axe s'effectuee par l'intermédiaire d'un gond en matière plastique solidaire du couvercle et comportant deux pinces moulées enserrant l'axe présentant une élasticité suffisante pour permettre un démontage facile du couvercl afin par exemple de le nettoyer et de démonter certaines parties telle qu'une cartouche filtrante pour les vapeurs d'eau, d'huile ou de graisse. Un tel dispositif offre l'avantage de la simplicité puisque son élément essentiel est une tige coudée tandis que dans la solution antérieure du brevet français No 2239223 l'assemblage du couvercle détachable de la friteuse est fondé sur l'utilisation de deux ressorts indépendants qui sont montés dans deux encoches alignées et dont les parties libres obturant partiellement les entrées des encoches sont éclipsables pour insérer deux pivots solidaires du couvercle.

Un but de l'invention est de réaliser un couvercle encliquetable du type décrit dans le premier brevet précité mais permettant une association entre le couvercle et la cuve de la friteuse qui est moins susceptible d'être affectée par les tolérances et l'usure de certaines pièces.

Suivant une première caractéristique de l'invention, la tige peut librement tourillonner à ses deux extrémités qui sont montées dans le couvercle et elle possède une partie centrale en forme d'archet qui est décalée de l'axe de rotation de la tige de telle sorte que lorsque les parties de la tige dans l'axe des pivots sont chacune insérées dans une encoche, la partie centrale peut pivoter pour venir s'arc-bouter contre une partie solidaire du récipient de manière à coincer la tige sous son élasticité propre, le déblocage s'effectuant par une action de rotation en sens inverse en agissant sur les parties de la tige reliant la partie centrale aux deux parties engagées dans les encoches lorsque le couvercle doit être détaché de l'appareil.

De cette manière, la fixation du couvercle n'est plus sujette à l'usure possible des pinces moulées en matière plastique enserrant partiellement la tige par l'élasticité naturelle des gorges pouvant être temporairement agrandies lors de l'insertion de la tige au fond des gorges. Avec la solution qui est maintenant proposée et où la fixation dépend de l'élasticité propre d'une tige coudée en vilebrequin coincée entre des éléments fixes, on devient indépendant de l'élasticité de pièces en matière plastique et un montage à charnière très ferme et peu susceptible d'usure est ainsi réalisé.

Le but et la caractéristique de l'invention mentionnés ci-dessus ainsi que d'autres et la meilleure manière de les obtenir seront mieux compris de la description qui fait suite d'une réalisation détaillée de l'invention devant être lue en conjonction avec les

- 3 -

dessins qui l'accompagnent et dans lesquels :

La Fig. 1 représente une vue en perspective d'une partie de la cuve et d'une partie du couvercle ouvert de la friteuse, y compris la charnière selon l'invention;

La Fig. 2 représente une vue en perspective d'une partie de la friteuse vue de l'extérieur, couvercle fermé, et montrant également la tige coudée servant de charnière; et

La Fig. 3 représente une vue partielle en coupe de la friteuse, y compris la tige servant de charnière et coincée entre deux parties solidaires de la cuve de la friteuse.

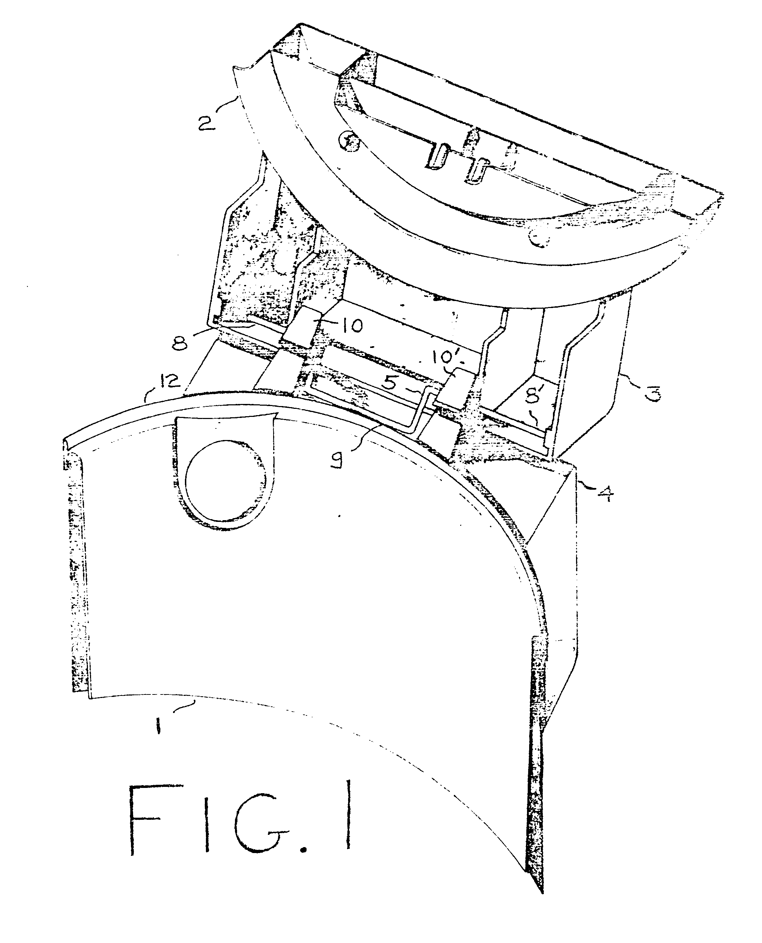

En se référant particulièrement à la Fig. 1, celle-ci montre partiellement la cuve 1 d'une friteuse domestique surmontée d'un couvercle métallique 2, portant lui-même un dessus de couvercle 3 en matière plastique, qui est monté sur la cuve et plus particulièrement sur la poignée 4, également en matière plastique, à l'aide d'une charnière essentiellement constituée par une tige 5 coudée en forme de vilebrequin. L'arrangement étant tel que le couvercle 2/3 peut facilement être complètement enlevé afin par exemple de le nettoyer.

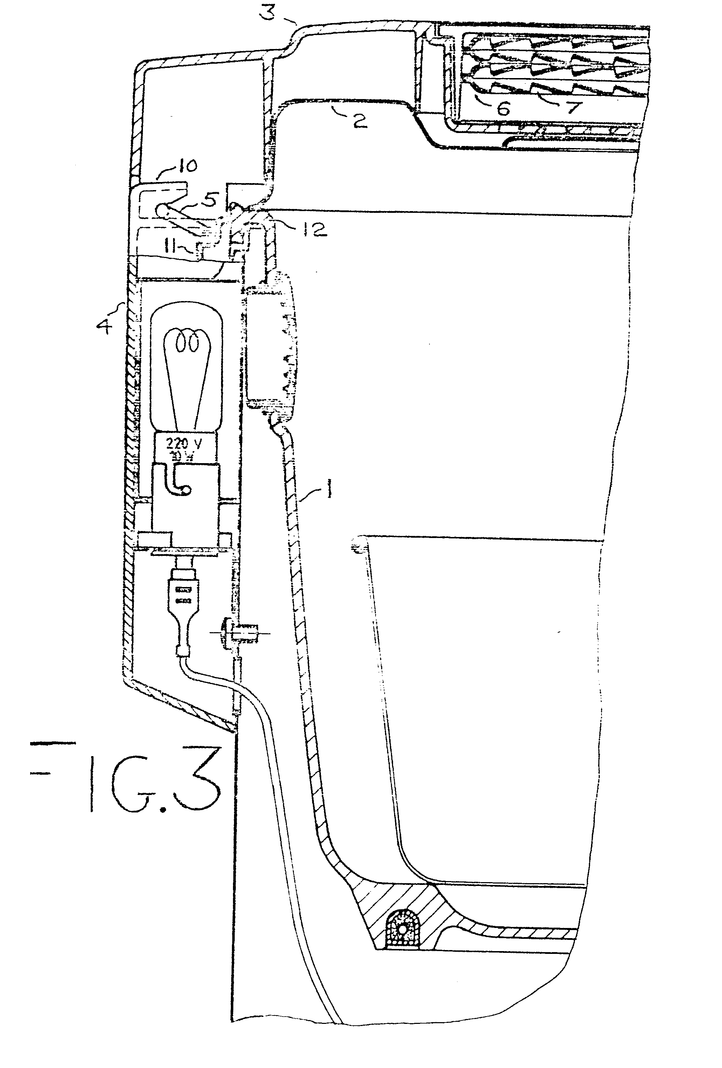

Il comporte en effet un logement pour un filtre à odeurs qui, comme montré à la Fig. 3, est constitué par la superposition de quatre grilles métalliques telles que 6 montées en paires en opposition afin que les ouïes telles que 7 de ces grilles forment un labyrinthe pour les fumées s'échappant ainsi de la cuve lors d'une cuisson.

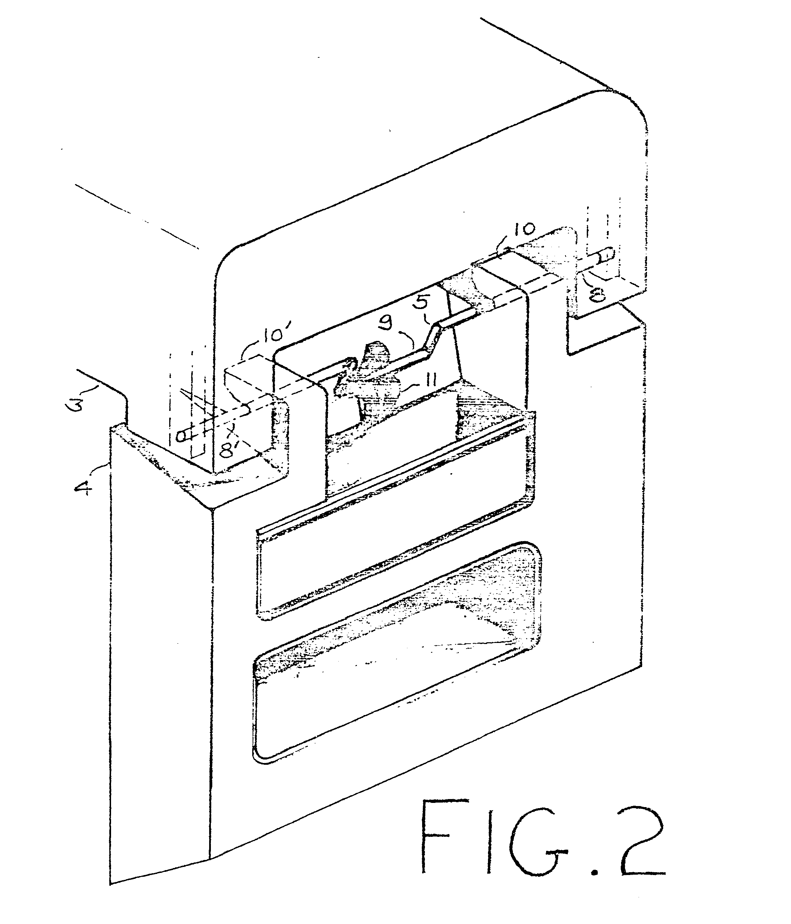

Comme le montre particulièrement les vues en perspectives des Figs. 1 et 2, la tige 5 constituant l'élément essentiel de la charnière est en forme de vilebrequin avec ses deux extrémités droites 8 et 8' qui peuvent tourillonner librement dans des trous prévus à l'intérieur du dessus de couvercle 3 en matière plastique. De cette manière, la partie centrale 9, en forme d'archet, de la tige peut pivoter librement autour de l'axe principal lorsque le couvercle est détaché de la cuve (non montré). Lorsqu'on désire mettre le couvercle sur la cuve 1, il suffit de le présenter dans une position oblique au-dessus de l'horizontale de manière à insérer les parties droites de la tige 5 dans les gorges prévues dans les épaulements 10 et 10' solidaires de la poignée 4 en matière plastique. Ensuite, la partie centrale 9 en forme d'archet peut alors être pivotée vers le bas en dessous de l'horizontale pour forcer son logement contre la cuve ou une partie solidaire de celle-ci.

En d'autres termes, on coince la tige 5 suite à son élasticité. Dès ce moment, le couvercle 3 peut être fermé et ouvert à volonté. Lorsqu'on souhaite démonter le couvercle, il suffit de faire pression, par exemple à l'aide du manche d'une cuillère, sur une des deux parties de la tige 5 qui sont perpendiculaires à son axe principal.

Afin de coincer la tige servant de charnière dans une position spécialement stable, comme indiqué particulièrement aux Figs. 2 et 3, on a prévu une butée centrale 11 obtenue lors du moulage de la poignée 4 en matière plastique et qui présente un creux dans lequel peut venir se loger la partie centrale de la charnière 5. Par rapport à une disposition où cette partie centrale viendrait simplement se coincer contre le rebord supérieur 12 de la cuve 1, la disposition montrée permet de s'affranchir des tolérances inhérentes à la fabrication des pièces et également en ce qui concerne le montage de la poignée sur la cuve. De cette manière, il n'est plus nécessaire de veiller à ce que la somme de ces diverses tolérances n'entraîne pas des variations pour la distance entre le fond des encoches dans les épaulements 46 et 46' et le bord extérieur 12 de la cuve 1 qui soit tellement grande qu'une fixation sûre de la tige à charnière 5 ne soit plus assurée.

- 5 -

REVENDICATIONS

1) Couvercle détachable (2) pour un appareil de cuisson et encliquetable dans une partie (4) solidaire du récipient (1) à l'aide d'une charnière constituée par une tige coudée (5) s'engageant dans des encoches (10/10') pratiquées dans cette partie, caractérisé par le fait que la tige peut librement tourillonner à ses deux extrémités (8/8') montées dans le couvercle et qu'elle possède une partie centrale en forme d'archet (9) est décalée de l'axe de rotation de la tige de telle sorte que lorsque les parties de la tige dans l'axe des pivot sont chacune insérées dans une encoche, la partie centrale peut pivoter pour venir s'arc-bouter contre une partie (11) solidaire du récipient de manière à coincer la tige sous son élasticité propre, le déblocage s'effectuant par une action de rotation en sens inverse en agissant sur les parties de la tige reliant à la partie centrale aux deux parties engagées dans les encoches lorsque le couvercle doit être détaché de l'appareil.

2) Couvercle (2) comme sous 1, caractérisé en ce que ladite partie solidaire du récipient comporte d'une part des épaulements formant les encoches (10/10') et entre ceux-ci, dans la direction de l'axe de ladite tige, une butée (11) contre laquelle la partie en forme d'archet (9) peut venir se presser afin de fixer la charnière en position.

FIG. 1

FIG.2

FIG.3